# EUROPÄISCHE PATENTSCHRIFT

(11) **EP 1 134 632 B1**
(45) Veröffentlichungstag und Bekanntmachung des Hinweises auf die Patenterteilung: **31.05.2006**
(21) Anmeldenummer: 01106225.4
(22) Anmeldetag: 14.03.2001
(51) Int. Cl.: G05B 19/042

(54) **Vorrichtung zur Erkennung von Funktionseinheiten**
Device for recognizing function units
Dispositif de reconnaissance d'unités fonctionnelles

(30) Priorität: 17.03.2000 DE 10013455
(43) Veröffentlichungstag der Anmeldung: 19.09.2001
(73) Patentinhaber: Heidelberger Druckmaschinen Aktiengesellschaft, 69115 Heidelberg (DE)
(72) Erfinder: Ihle, Rainer, 69245 Bammental (DE); Schlindwein, Gerhard, 76676 Graben-Neudorf (DE); Strunk, Detlef, 69120 Heidelberg (DE); Tusch, Jan, 69126 Heidelberg (DE)

(56) Entgegenhaltungen:
- EP-A- 0 961 122
- DE-U- 29 513 317
- US-A- 5 363 446
- US-A- 6 014 714

## Beschreibung

Die Erfindung betrifft eine Vorrichtung zur Erkennung von Funktionseinheiten eines vorzugsweise optionalen oder in unterschiedlichen Aufbaustufen vorgesehenen, elektrischen Systems mit einer Datenverarbeitungseinheit (CPU) und wenigstens einer Funktionseinheit, wobei die Funktionseinheit ein Funktionsregister mit einem nicht flüchtigen Speicher zur Aufnahme von Funktionsdaten aufweist. Des weiteren ist ein Verfahren zur Erkennung einer Funktionseinheit mittels dieser Vorrichtung von der Erfindung umfasst.

Vorrichtungen dieser Art werden eingesetzt, damit ein Datenaustausch zwischen den für den Betrieb notwendigen Funktionseinheiten im elektrischen System und den Datenverarbeitungsprogrammen, welche mittels CPU ausgeführt werden, möglich ist. Die Funktionseinheiten umfassen im Wesentlichen die elektronischen Elemente der Bauteile, wie Datenleitungen, Interfaces, Speicher, Ein-Ausgabe-Einheiten, Schnittstellen sowie Steuerelemente und dergleichen.

Damit die Funktionseinheiten des elektrischen Systems untereinander und mittels CPU erkennbar sind, ist es erforderlich, dass alle Funktionsdaten der Eigenschaften jeder Funktionseinheit bekannt sind und dem elektrischen System und der CPU lesbar zur Verfügung stehen. Wird ein Datenverarbeitungsprogramm von einer Datenverarbeitungseinheit (CPU) abgearbeitet und führt dabei Befehle aus, die den Zugriff auf die Funktionseinheit erfordern, ist dies nur möglich, wenn das Format der Funktionsdaten bei der Datenkommunikation bekannt ist. Wird das Format der für die Funktionseinheit vorliegenden Daten vom Datenverarbeitungsprogramm oder von anderen beteiligten Funktionseinheiten verstanden, liegt Kompatibilität zwischen diesen Komponenten vor. Da die CPU beim Ausführen des Datenverarbeitungsprogramms nicht ohne weiteres erkennen kann, ob die Formate bei der Datenkommunikation kompatibel sind, besteht die Gefahr, dass inkompatible Daten miteinander verarbeitet werden und es zu Fehlinterpretationen und Fehlfunktionen der beteiligten Komponenten kommt.

Neben den Elementen der Bauteile können des weiteren virtuelle Geräte des elektrischen Systems wie Treiber für Datenverarbeitungsprogramme und dergleichen als Funktionseinheiten in Betracht kommen.

Ein elektrisches System besteht in der Regel aus einer Vielzahl von Funktionseinheiten. Des weiteren umfasst das elektrische System auch die Datenverarbeitungsprogramme, welche die Funktionseinheiten für den Betrieb des elektrischen Systems über die CPU ansprechen und steuern. Die elektrischen Systeme werden mit einer Grundausstattung an Funktionseinheiten und Datenverarbeitungsprogrammen hergestellt und an die Erfordernisse der jeweiligen Einsatzzwecke angepasst. Dabei werden einzelne Funktionseinheiten und Datenverarbeitungsprogramme nachgerüstet oder ausgetauscht. Häufig werden die elektrischen Systeme in unterschiedlichen Ausbaustufen hergestellt und können später mit weiteren Funktionseinheiten vervollständigt werden. Dabei ist es möglich, je nach der erforderlichen Funktionalität des Systems Ausbaustufen zusammenzustellen. Bei dieser Art der Ausgestaltung von elektrischen Systemen werden einzelne oder Gruppen von Funktionseinheiten zusammengeschaltet und von einer oder mehreren Datenverarbeitungseinheiten mittels Datenverarbeitungsprogrammen gesteuert.

Da an einem solchen elektrischen System Funktionseinheiten ausgetauscht, ergänzt, entfernt oder erneuert werden, müssen diese neuen Funktionseinheiten stets für das System erkennbar und kompatibel sein. Dies ist insbesondere für die Datenverarbeitungsprogramme von Bedeutung, welche mit den Funktionseinheiten des elektrischen Systems kommunizieren, da diese die Steuerung des Systems gemäß der Kompatibilität der Funktionseinheiten vornehmen.

Um die Funktionseinheiten für das System erkennbar zu machen, wird in der DE 295 13 317 eine Vorrichtung zur automatischen Erkennung von Funktionseinheiten eines optional oder in unterschiedlichen Ausbaustufen vorgesehenen elektrischen Systems vorgeschlagen. Das elektrische System besteht aus einer Datenverarbeitungseinheit, welche mindestens eine Funktionseinheit aufweist. Diese Funktionseinheit dient als standardisierter Steckplatz für allen Arten von Funktionseinheiten. Jede dieser Funktionseinheiten besitzt eine eindeutige Codierung zu ihrer Identifikation. Für jede Funktionseinheit ist mindestens ein Schieberegister zur Aufnahme der zu dieser Funktionseinheit gehörenden Codierung vorgesehen. Jede Funktionseinheit ist mit einem Anschluss zur seriellen Ausgabe ihrer Codierung ausgestattet. Die Datenverarbeitungseinheit weist Mittel zum Ansteuern des Schieberegisters einer Funktionseinheit und zum seriellen Auslesen der darin enthaltenen Codierung auf. Nachteil dieser Vorrichtung ist, dass bei Änderungen oder Erweiterungen von Eigenschaften einer Funktionseinheit, die Codierung unverändert beibehalten wird, da die Funktionseinheit an sich nicht ausgetauscht wird. Entsprechend ist die Software zu ändern, damit die Änderungen der Funktionseinheit von den alten Datenverarbeitungsprogrammen weiterhin genutzt werden kann. Da jede Funktionseinheit eine eindeutige Codierung hat, sind Datenverarbeitungsprogramme, welche die Funktionseinheit vor einer Änderung ansprechen konnten, ohne Aktualisierung nach einer Änderung nicht mehr zu einem Datenaustausch in der Lage, da die Programme die geänderten Eigenschaften nicht identifizieren können. Des weiteren sind auch bei Installation neuer Programme alle Codierungen der vorhandenen Funktionseinheiten zu beachten. Das bedeutet, dass ein neues Programm ohne ein Verzeichnis aller alten Codierungen nicht in der Lage ist, alte Funktionseinheiten zu identifizieren. Wird andererseits eine Funktionseinheit wie vorbeschrieben geändert und es wird gleichzeitig auch die Codierung geändert, können Datenverarbeitungsprogramme, welche die Funktionseinheit vor einer Änderung ansprechen konnten, dies nicht mehr, wenn diese nicht mit der neuen Codierung aktualisiert werden.

Aus der EP 0 961 122 A1 ist ein Elektrizitätszähler mit einem einen Mikrocomputer aufweisenden Basis-Elektrizitätszähler, der mit einem oder mehreren austauschbaren Zählerbausteinen bestückt ist, bekannt. Die als Ausführungs-Variante vorgesehenen austauschbaren Zählerbausteine sind mit einem kennzeichnendem Identifikations-Merkmal ausgestattet, welches vom Basis-Elektrizitätszähler lesbar ist, zwecks dortiger Verarbeitung und Interpretation.

Nachteilig an diesem System ist, dass der Basis-Elektrizitätszähler nur Zählerbausteine lesen bzw. verarbeiten kann, die in dessen Verzeichnis eingetragen sind. Neu entwickelte Zählerbausteine, die nicht in der Liste des Basis-Elektrizitätszählers vermerkt sind, können nicht betrieben werden.

Insbesondere, wenn Teile für elektrische Systeme nach längerer Zeit ersetzt werden müssen, zeigt es sich, dass trotz Kompatibilität der darauf zugreifenden Datenverarbeitungsprogramme die neuen Funktionseinheiten nicht mehr ansprechbar sind, weil deren neue Codierung bei den alten Datenverarbeitungsprogrammen nicht bekannt sind. Andererseits führt es auch zu Problemen, wenn Funktionseinheiten geändert werden und ihre alten Codierungen unverändert beibehalten werden. Dann werden die kompatiblen Funktionseinheiten von den aktuellen Datenverarbeitungsprogrammen des elektrischen Systems als die ursprünglichen identifiziert und die neuen Eigenschaften der geänderten Funktionseinheit erfüllen nicht mehr die alten Eigenschaften. Dabei kommt es häufig zu Funktionsstörungen, welche den Stillstand des Systems oder Fehler beim Betrieb zur Folge haben.

Die gleichen Nachteile treten auf, wenn eine Funktionseinheit in unterschiedlichen Anwendungen, das heißt in verschiedenen elektrischen Systemen verwendet oder ausgetauscht werden soll. Die Datenverarbeitungsprogramme des einen Systems erkennen dann die Funktionseinheiten des anderen Systems nicht, da Codierungen nicht austauschbar sind.

In der Regel können diese Probleme durch entsprechende Aktualisierungen der entsprechenden Datenverarbeitungsprogramme gelöst werden, welche die entsprechenden Funktionsdaten enthalten, die mit der entsprechenden Codierung verknüpft sind. Dies erfordert jedoch für jede Änderung oder Erweiterung der Funktionsdaten des Systems einen erheblichen Programmieraufwand, eine aufwendige Datenpflege und entsprechende Stillstandszeiten der mit dem elektrischen System betriebenen Anlage bei der Durchführung der Aktualisierung.

Im Rahmen der Entwicklungszyklen von Datenverarbeitungsprogrammen und Funktionseinheiten kann es zu verschiedenen Kombinationen von alten und neuen Versionen von Datenverarbeitungsprogrammen und Funktionseinheiten kommen. So sollte z.B. ein neu erstelltes Datenverarbeitungsprogramm alle Entwicklungsstufen einer Funktionseinheit erkennen und entsprechende Anpassungen des Systems vornehmen, um Fehlfunktionen zu vermeiden. Ebenso sollen alte Versionen von Datenverarbeitungsprogrammen mit neuen kompatiblen Versionen von Funktionseinheiten zusammenarbeiten können. Hierzu muss die eindeutige Erkennung der Eigenschaften der Funktionseinheiten gewährleistet sein.

Aufgabe der Erfindung ist es folglich, eine Vorrichtung bereitzustellen, mit welcher die vorgenannten Nachteile vermieden werden und welche eine zuverlässige und einfach realisierbare Erkennung von Funktionseinheiten, insbesondere der Funktionseinheiten von elektronischen Elementen von Bauteilen beziehungsweise den Hardwarekomponenten der elektronischen Anlage gewährleistet. Des weiteren ist es Aufgabe der Erfindung ein Verfahren zur Erkennung von Funktionseinheiten bereitzustellen.

Eine Lösung der Aufgabe wird dadurch zur Verfügung gestellt, dass der Speicher wenigstens einen Funktionseintrag mit Funktionsdaten aufweist, welche den physikalischen Eigenschaften der Funktionseinheit zugeordnet sind und dass eine Änderung der Eigenschaften der Funktionseinheit durch eine Änderung der entsprechenden Funktionsdaten des Funktionseintrags im Funktionsregister aufnehmbar ist.

Vorteil der Vorrichtung ist, dass die physikalischen Eigenschaften einer Funktionseinheit in dem zugehörigen Funktionsregister bereitgestellt und abfragbar sind. Zu den physikalischen Eigenschaften gehören die Werte für Spannung, Strom und Widerstand für den Ein- und Ausgang der Funktionseinheit sowie Schnittstellenparameter wie Signalcharakteristika, Übertragungsprotokolle- und raten und dergleichen.

Die Zuordnung der Funktionsdaten erfolgt, indem sie im Funktionsregister in einem Funktionseintrag strukturiert abgespeichert werden. Sie weisen dabei ein vorgegebenes Format auf, beispielsweise Parameter, Parameterfelder oder Strings, und dergleichen. Der Funktionseintrag weist dabei die vorgegebenen Funktionsdaten auf.

Eine Änderung beziehungsweise Erweiterung der Eigenschaft einer Funktionseinheit wird im Funktionsregister durch eine dementsprechende Änderung der Funktionsdaten des Funktionseintrags aufgenommen. Somit kann nach der Änderung des Funktionseintrags ein Datenverarbeitungsprogramm, welches bei dieser Änderung nicht aktualisiert worden ist, die unveränderten und kompatiblen Eigenschaften der Funktionseinheit weiterhin erkennen, da diese im Funktionseintrag weiterhin unverändert vorhanden sind. Die neuen veränderten Eigenschaften werden nur von den neuen Datenverarbeitungsprogrammen erkannt, welche mit diesen Eigenschaften kompatibel sind und diese Eigenschaften anfordern.

Eine neue Funktionseinheit wird erfindungsgemäß im elektrischen System mit dem Funktionsregister eingebaut oder das Funktionsregister wird entsprechend der Eigenschaften nach dem Einbau konfiguriert. Die Eigenschaften sind jeweils mit dem Funktionseintrag im Funktionsregister dargestellt. Bei einer Prüfung des Funktionseintrags durch ein altes Datenverarbeitungsprogramm, werden die neuen Funktionsdaten, für die das Programm keine Verwendung hat, nicht berücksichtigt und damit die dementsprechenden Eigenschaften nicht erkannt. Ausschließlich die für den Betrieb notwendigen, mit diesem Programm kompatiblen Funktionseinträge werden erkannt. Der Betrieb der neuen Funktionseinheit mit den für dieses alte Datenverarbeitungsprogramm notwendigen Eigenschaften ist somit möglich.

Neue Datenverarbeitungsprogramme erkennen neben den alten auch die neuen Eigenschaften und binden die Funktionseinheit entsprechend ihrer Eigenschaften in den Betrieb ein. Somit ist in vorteilhafter Weise gewährleistet, dass die Funktionseinheit mit neuen und alten Datenverarbeitungsprogrammen betrieben werden kann, ohne dass eine Aktualisierung der für den Betrieb notwendigen Datenverarbeitungsprogramme erforderlich wird, wenn eine Änderung der Eigenschaften oder eine Erweiterungen um neue Eigenschaften der Funktionseinheit oder auch ein Austausch der alten Funktionseinheit durch eine neue erforderlich ist.

Auch wenn zwei Funktionseinheiten direkt aufeinander zugreifen, was vor allem bei Funktionseinheiten mit eigener CPU vorkommt, kann die Datenkommunikation mittels der vorgegebenen Funktionseinträge in den jeweiligen Funktionsregistern gesteuert werden.

Eine besonders vorteilhafte Ausgestaltung der Erfindung wird dadurch zur Verfügung gestellt, dass jeder Funktionseintrag im Funktionsregister vorzugsweise durch Löschen, Überschreiben und/oder Ergänzen von einzelnen und/oder von Gruppen von Funktionsdaten veränderbar ist. Diese Ausgestaltung ermöglicht es, eine Veränderung einzelner Eigenschaften der Funktionseinheit im Funktionseintrag gesondert zu berücksichtigen. Dabei werden ausschließlich die Funktionsdaten verändert, die die Änderung der Eigenschaften repräsentieren. Außerdem kann eine Eigenschaft, die vollständig entfernt werden soll, dadurch aus dem Funktionsregister entfernt werden, in dem ihrem entsprechendem Funktionseintrag die Funktionsdaten mit einem Nullwert überschrieben werden. Wird die Eigenschaft durch eine andere Eigenschaft ersetzt, ist es auch möglich, dies durch einen Verweis auf einen neuen Funktionseintrag im Funktionsregister auszudrücken, wobei der ursprüngliche Funktionseintrag durch den Verweis selbst geändert wird. Dazu sind auch mehrere Funktionseinträge in einem Funktionsregister vorgesehen.

Das System kann somit stets mit den bereits vorhandenen Datenverarbeitungsprogrammen oder Funktionseinheiten betrieben werden. Die Kompatibilität bleibt bei jeder Änderung erhalten und die Eigenschaften sind weiterhin erkennbar.

Eine weitere Ausführung der Vorrichtung wird dadurch bereitgestellt, dass Datenverarbeitungsprogramme für den Betrieb einer Funktionseinheit mit den Funktionsdaten korrespondierende Zugriffsdaten aufweisen. Wenn beim Betrieb des Systems die von einem Datenverarbeitungsprogramm gesteuerte CPU auf eine Funktionseinheit zugreift, werden zunächst die Funktionsdaten der Funktionseinträge geprüft, ob die für den Zugriff notwendigen Eigenschaften von der Funktionseinheit zur Verfügung gestellt werden. Hierzu ist es erforderlich, dass korrespondierende Zugriffsdaten der Datenverarbeitungsprogramme vorhanden sind, mit welchen die Funktionseinträge eines Funktionsregisters geprüft und im Falle, dass die Eigenschaften zur Verfügung stehen, von der CPU initialisiert werden.

Eine weitere Ausgestaltung der Vorrichtung wird dadurch bereitgestellt, dass Funktionsregister verschiedener Funktionseinheiten des elektrischen Systems vorzugsweise über die CPU miteinander verbunden sind und die Kompatibilität einer Funktionseinheit mit einer anderen Funktionseinheit und/oder mit einem Datenverarbeitungsprogramm durch Vergleichen der korrespondierenden Funktions- und/oder Zugriffsdaten überprüfbar ist. Insbesondere wenn Funktionseinheiten verschiedener Hardwarekomponenten über die CPU oder unmittelbar aufeinander zugreifen, beziehungsweise Daten austauschen sollen, ist es vorteilhaft, dass die Funktionsregister entsprechend miteinander verknüpft sind. Dies wird mit einem Netzwerk oder mit einer CPU gewährleistet, welche die Funktionsregister verbindet, so dass bei einem Zugriff auf eine Funktionseinheit, der ihr zugeordnete Speicher mit den Funktionseinträgen der CPU zur Verfügung steht In vorteilhafter Weise wird die CPU hierzu mittelbar oder unmittelbar mit den Funktionsregistern verbunden. Die CPU kann dabei die Funktionsdaten vergleichen und den Zugriff auf, den Betrieb von oder den Datenaustausch mit den Funktionseinheiten entsprechend regeln.

Eine bevorzugte Ausgestaltung der Erfindung, wird des weiteren dadurch bereitgestellt, dass das Funktionsregister einen Sammelfunktionseintrag aufweist, welchem Funktionsdaten von Eigenschaften der Funktionseinheit zugeordnet sind, welcher eine Zuordnung in den Funktionseinträgen fehlt. Weist eine Funktionseinheit im elektrischen System Eigenschaften auf, welche nicht einem Funktionseintrag standardmäßig zugeordnet sind und denen somit entsprechende Funktionsdaten in den Funktionseinträgen fehlen, beispielsweise bei einer für die Datenverarbeitungsprogramme relevanten Änderung einer Funktionseinheit, ist es vorteilhaft, diese Funktionsdaten in dem Sammelfunktionseintrag zu speichern. In vorteilhafter Weise werden die entsprechenden Eigenschaften vom Datenverarbeitungsprogramm prüfbar, ohne dass die Datenstruktur der vorhandenen Funktionseinträge verändert werden muss.

Eine weitere Ausgestaltung der Erfindung, wird des weiteren dadurch bereitgestellt, dass das Funktionsregister zur Speicherung der Funktionsdaten wenigstens einen mechanisch betätigbaren und/oder elektronischen Schreib-Lese-Speicher, vorzugsweise einen DIP-Schalter, eine lLötbrücke, einen Jumper oder einen Speicherbaustein aufweist. In vorteilhafter Weise lassen sich die Funktionseinträge mit mechanisch betätigbaren vorzugsweise elektronischen Speichereinheiten herstellen und codieren. Hierzu kommen vor allem Schalter und dergleichen in Betracht. Des weiteren sind elektronische Speicher einsetzbar, die in einfacher Weise in das elektrische System eingebunden werden können und ebenso einfach vernetzbar sind. Die Verwendung der elektronischen Speicherbausteine sind mit erheblichen Kostenvorteilen verbunden.

Eine weitere Ausgestaltung der erfindungsgemäßen Vorrichtung wird dadurch bereitgestellt, dass das elektrische System Funktionseinheiten einer Baugruppe einer Druckmaschine, vorzugsweise Eingabe-Ausgabe-Einheiten, Stellantriebe, Schnittstellen und/oder Speicher- und Datenverarbeitungseinheiten eines Antriebsmotors, umfasst. Es ist dabei vorgesehen, dass jede Baugruppe mit einem EEPROM als Funktionsregister ausgestattet ist, welches die Funktionsdaten aller beteiligten Komponenten der Baugruppe enthält. Vorzugsweise werden die Funktionsdaten von Motor, Tacho, Bremse und Lüfter Speicheradressen zugeordnet und stehen der CPU lesbar zur Verfügung.

Eine weitere Lösung wird mit einem Verfahren zur Erkennung einer Funktionseinheit mittels der erfindungsgemäßen Vorrichtung zur Verfügung gestellt. Dabei ist erfindungsgemäß vorgesehen, dass jede Eigenschaft der Funktionseinheit durch einen dieser Eigenschaft zugeordneten Funktionseintrag und/oder Sammelfunktionseintrag im Schreib-Lese-Speicher des Funktionsregisters gespeichert wird und dass die Änderung eines Funktionseintrages durch Ersetzen, Ergänzen und/oder Löschen von einzelnen oder einer Gruppe von Funktionsdaten oder des gesamten Funktionseintrages im Schreib-Lese-Speicher erfolgt. In vorteilhafter Weise kann beim Betrieb des Systems die Steuerung der beteiligten Funktionseinheiten durch die Prüfung des Funktionsregisters verbessert werden, da die für den Zugriff auf die jeweilige Funktionseinheit erforderlichen Eigenschaften zunächst anhand des hierfür vorgesehenen Funktions- oder Sammelfunktionseintrags geprüft werden können. Hierbei ist zunächst eine Prüfung vorgesehen, die feststellt, ob die notwendige Eigenschaft für den Zugriff auf die Funktionseinheit vorhanden ist. Das bedeutet, sowohl die Existenz der Hardwarekomponente wird geprüft, als auch die entsprechenden Schaltungsvoraussetzung, welche beispielsweise die Übertragungsrate, den Ein- und Ausgang und die Ansteuerungssignale umfassen. In vorteilhafter Weise ist so die Kompatibilität der Funktionseinheit mit anderen Komponenten des elektrischen Systems erkennbar, die notwendigen Initialisierungen der Signale zur Anpassung des Zugriffs können ausschließlich von den Funktionseinträgen des Funktionsregisters abhängig gemacht werden. Die Steuerung von Zugriffen auf eine Funktionseinheit über Versionskompatibilitätslisten in der Software oder dazu vorgesehenen Dateien ist somit nicht mehr notwendig. Damit entfallen beim Ersetzen oder Verändern beziehungsweise bei der Wartung des Sytems im Wesentlichen zeitaufwendige Aktualisierungen, da die Veränderungen von Funktionseinheiten in deren Funktionsregistern für das gesamte System erkennbar sind.

Eine Ausgestaltung dieses Verfahrens wird dadurch erreicht, dass beim Betrieb des elektronischen Systems mit einem Datenverarbeitungsprogramm die Funktionsdaten des Funktionseintrags mit den Zugriffsdaten des Datenverarbeitungsprogramms von der CPU auf Kompatibilität geprüft werden und dass der Zugriff auf die Funktionseinheit entsprechend der korrespondierenden Funktionsdaten gesteuert wird. Dabei ist vorgesehen, dass die CPU bei fehlender Kompatibilität eines Datenverarbeitungsprogramms mit einer Funktionseinheit eine Fehlermeldung erzeugt und/oder den Programmablauf abbricht. In vorteilhafter Weise wird somit vermieden, dass Inkompatibilitäten der Funktionseinheiten oder der Datenverarbeitungsprogramme zu Fehlfunktionen der Funktionseinheiten und damit zu Fehlern beim Betrieb der Anlage führen. Es ist auch vorgesehen, dass die Ausgabe der Fehlermeldung an anderen Funktionseinheiten oder an die systemverwaltenden Datenverarbeitungsprogramme erfolgt, so dass eine Korrektur automatisiert vorgenommen werden kann.

Eine besonders bevorzugte Ausgestaltung der Erfindung wird durch ein Verfahren mit den folgenden Schritten zur Verfügung gestellt, durch folgende Schritte:
Prüfen des Sammelfunktionseintrags, ob die notwendigen Eigenschaften vorhanden sind und die Funktionseinheit kompatibel ist;
Initialisierung der kompatiblen Funktionseinheit (2) für den Zugriff durch die vom Datenverarbeitungsprogramm gesteuerte CPU (3);
Zugriff durch Aktivierung der kompatiblen Eigenschaften der Funktionseinheit (2);
Prüfen der Kompatibilität der Parameter der optionalen und vorhandenen Funktionsdaten des Funktionsregisters (4) mit den parametrisierenden Zugriffsdaten des Datenverarbeitungsprogramms;
Initialisierung der kompatiblen, optionalen und vorhandenen Funktionsdaten;
Zugriff durch Aktivierung der optionalen und vorhandenen Eigenschaften.

Dabei ist vorgesehen, dass die Initialisierung durch folgende Schritte vorgenommen wird:
Konfigurieren der kompatiblen Funktionseinheit (2), entsprechend der Funktionsdaten aus dem Funktionsregister (4);
Prüfen, ob alle für den Ablauf des Datenverarbeitungsprogramms benötigten Funktionsdaten vorhanden sind;
Prüfen der Kompatibilität der Funktionsdaten mit den Zugriffsdaten des Datenverarbeitungsprogramms;
Parametrisierung der kompatiblen Funktionsdaten.

Jede softwarerelevante Änderung einer Eigenschaft der Funktionseinheiten, also einer Hardwarekomponente, wird im Funktionsregister durch eine Änderung des zugeordneten Funktionseintrags dargestellt. Um die Kompatibilität von Datenverarbeitungsprogrammen mit der Funktionseinheit bezüglich der unveränderten Eigenschaften nicht zu verändern, werden die Funktionsdaten des zugeordneten Funktionseintrags erhalten. Ein Datenverarbeitungsprogramm, welches auf diese Funktionseinheit zugreift, prüft die Mindestanforderungen an die von der Funktionseinheit zur Verfügung gestellten Eigenschaften, also die notwendigen Funktionen. Werden nicht alle dieser notwendigen Funktionen von der Funktionseinheit zur Verfügung gestellt, muss sicher gestellt sein, dass das Datenverarbeitungsprogramm angehalten wird, um Fehlfunktionen zu vermeiden. Des weiteren kann ein Datenverarbeitungsprogramm weitere nicht notwendige Eigenschaften (optionale Funktionen) einer Funktionseinheit benutzen, sofern diese im Funktionsregister vorhanden sind.

Wegen der Begrenzung des Speicherplatzes der für die Funktionsregister verwendeten Speicherbausteine, beispielsweise EEPROM-Speicherbausteine, ist eine Datenorganisation vorgesehen. Dies wird dadurch erreicht, dass die Speicheradressen der Funktionsregister in Hauptgruppen mit freien Speicheradressen und in Untergruppen mit belegten Speicheradressen untergliedert werden. Die Anordnung beziehungsweise die Reihenfolge der Parameter in einer Speicheradresse einer Untergruppe ist vorbestimmt und nicht veränderbar. Die übergeordneten Hauptgruppen sind dabei beliebig benutzbar. Einer chaotischen Anordnung der Daten wird damit entgegengewirkt, dass den Untergruppen gleich geartete Daten, wie z. B. physikalische Parameter, zugeordnet werden. Die Reihenfolge der Parameter ergibt sich dann so, wie sie für die Untergruppe definiert ist und im Laufe der Zeit ergänzt wird. Jeder Untergruppe ist ein Funktionseintrag in Form eines Wertes zugeordnet, der angibt, welcher Parameter in der vorgegebenen Reihenfolge vorliegt. In einer bevorzugten Ausgestaltung kann jeder Untergruppe genau ein Parameter zugewiesen werden, womit folglich jedem Parameter dann ein Wert zugeordnet ist. Damit ist eine beliebige abwärtskompatible Änderung der Parameteranordnung möglich.

Jede Änderung der Funktionseinheit wird durch Erweiterung des jeweiligen Funktionseintrags der CPU und damit dem elektrischen System angezeigt. Bei der Erweiterung der Funktionsdaten in einem Funktionseintrag bleiben die alten Datensätze der Funktionsdaten in dieser Untergruppe erhalten, so dass sie für die bisher kompatiblen Datenverarbeitungsprogramme gültig bleiben. Eine Änderung der Funktionseinheit kann durch einen neuen Funktionseintrag im Funktionsregister dem elektrischen System ' ' angezeigt werden. Dabei kann der ursprünglich zugeordnete Funktionseintrag gelöscht oder ungültig gemacht werden. Im Sammelfunktionseintrag wird die Gültigkeit bestimmter Funktionseinträge für die Datenverarbeitungsprogramme festgelegt. Des weiteren ist es vorgesehen, dass einzelne Funktionsdaten eines Funktionseintrags durch einen Eintrag im Sammelfunktionseintrag für bestimmte Zugriffe gesperrt und so für bestimmte Datenverarbeitungsprogramme ungültig gemacht werden. In vorteilhafter Weise wird so jede Funktionseinheit, das heißt die Hardwarekomponente eines elektrischen Systems, wie beispielsweise ein regelbarer Motor einer Druckmaschine, mit einem multifunktionellen Schalter versehen, der den Datenverarbeitungsprogrammen ermöglicht, die individuellen Eigenschaften dieser Funktionseinheit anzusteuern und zu aktivieren, wobei gleichzeitig die erforderlichen Parameter für den Zugriff zur Verfügung gestellt werden. Spätere Erweiterungen oder sonstige Änderungen der Funktionseinheit, welche keinen Einfluss auf die notwendigen Eigenschaften des Datenverarbeitungsprogramms haben, und die dementsprechenden Funktionsdaten in den Funktionseinträgen stören einen Zugriff und eine Aktivierung der jeweiligen Eigenschaft der Funktionseinheit durch dieses Datenverarbeitungsprogramm nicht.

Die Erfindung wird im Folgenden anhand der Zeichnung und eines Beispiels erläutert.

Es zeigen
- Fig. 1: eine Funktionsskizze der Vorrichtung;
- Fig. 2: ein Beispiel einer Adressenbelegung des Funktionsregisters mit Funktionsdaten.
- Fig. 3: ein Ablaufdiagramm für die Prüfung eines Funktionsregisters bei Start der Software nach dem Einschalten;
- Fig. 4: die Belegung der Funktionsdaten eines Sammelfunktionseintrags.

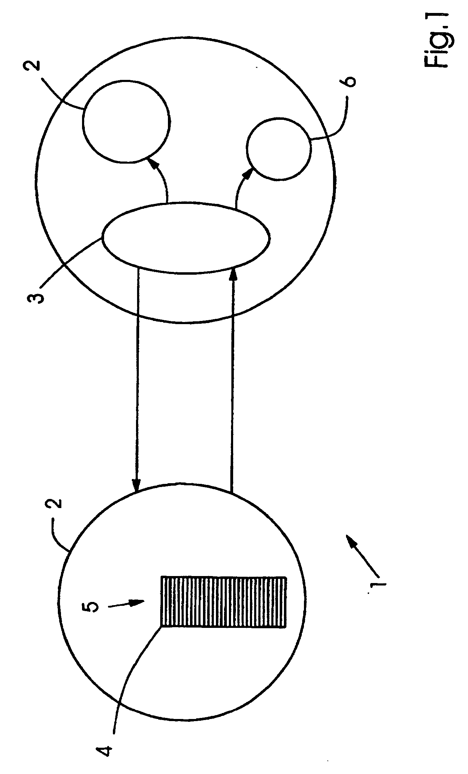

In Figur 1 ist eine Funktionsskizze der Vorrichtung 1 dargestellt, die eine Funktionseinheit 2 und eine Datenverarbeitungseinheit (CPU) 3 umfasst. Die Funktionseinheit 2 weist ein Funktionsregister 4 mit Funktionseinträgen auf, welches für die Speicherung der den Eigenschaften der Funktionseinheit zugeordneten Funktionsdaten vorgesehen ist.

Die CPU 3 ist mit dem Funktionsregister 4 und der Funktionseinheit 2 sowie weiteren Funktionseinheiten 2 verbunden. Außerdem umfasst die CPU 3 Datenverarbeitungsprogramme zur Steuerung und Regelung des elektrischen Systems, welchem die Vorrichtung 1 zugeordnet ist.

Wird vom elektrischen System auf eine Funktionseinheit 2 zugegriffen, stellt die CPU 3 eine Funktionsanfrage an das Funktionsregister 4 der Funktionseinheit 2 und erhält eine Antwort gemäß der Funktionsdaten der Funktionseinträge. Mit diesen Funktionsdaten berechnet die CPU 3 das Funktionsangebot, das heißt die Funktionalität und die Kompatibilität der Funktionseinheit 2 nach einem vorgegebenen, im Stand der Technik bekannten Algorithmus. Ist die Funktionalität und die Kompatibilität gegeben, kann der Zugriff und/oder der Datenaustausch erfolgen.

Ist keine Funktionalität beziehungsweise Kompatibilität gegeben, erzeugt die CPU 3 eine Fehlermeldung an eine Eingabe-Ausgabe-Einheit 6 des Systems beziehungsweise der Ablauf des Datenverarbeitungsprogramms wird angehalten. Im Falle, dass eine Funktionseinheit 2 des Systems auf eine andere Funktionseinheit 2 zugreifen wollte, kann die Fehlermeldung auch an diese unmittelbar ausgegeben werden.

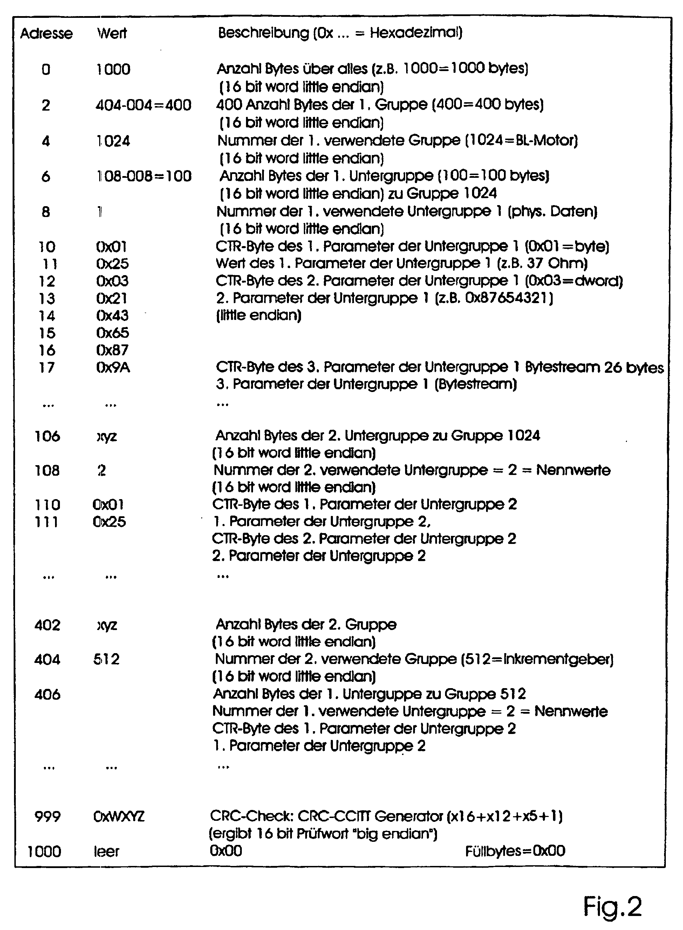

In Figur 2 ist eine typische Speicherbelegung des Funktionsregisters anhand des Beispiels eines EEPROM-Speicherbausteins erläutert. Sobald die Funktionalität einer Funktionseinheit geändert oder erweitert wird, erhält das Funktionsregister weitere Funktionsdaten zugeordnet, ohne dass die ursprünglich vorhandenen Zuordnungen verändert werden. Dies wird dadurch erreicht, dass die Funktionsdaten mit einem vorgegebenen und im Stande der Technik bekannten Algorithmus codiert werden und einem neuen Funktionseintrag zugeordnet werden. Es ist vorgesehen, dass die Funktionsdaten in dem Funktionseintrag im Funktionsregister als von der CPU lesbares Datensegment, vorzugsweise als Byte gespeichert werden. Die Anzahl aller Funktionseinträge wird an die CPU in einem Format als Integer- oder Hexadezimal-Word übermittelt. Anhand dieser Funktionseinträge ist ein Vergleich mit in den Datenverarbeitungsprogrammen und/oder Funktionseinheiten hinterlegten Zugriffsdaten möglich. In vorteilhafter Weise kann der Vergleich der Funktionseinträge mit Zugriffsdaten der Datenverarbeitungsprogramme und/oder Funktionseinheiten ohne weitere Decodierung erfolgen, so dass die Rechenzeit gering bleibt und der Vorgang effizient durchgeführt werden kann. Die Belastung der CPU bleibt daher auch bei einer großen Anzahl von Zugriffen gering.

In dem Beispiel werden die Funktionsregister in Hauptgruppen und Untergruppen untergliedert, welchen entsprechende Gruppennummern zugeordnet werden. Die Hauptgruppennummern legen die Spezifikation aller Daten im Funktionsregister fest. Sie repräsentiert bestimmte Funktionseinheiten. In dem vorgegebenen Beispiel sind die Werte 1024, 1026, 1028 und 1030 verschiedenen Druckmaschinenmotoren zugeordnet. Die Werte 512, 514 und 516 sind Signalgebern, der Wert 640 einem Temperaturfühler und der Wert 768 einer Bremse einer Druckmaschine zugeordnet. Damit liegt der Interpretationsrahmen der Daten fest.

Um einer chaotischen Anordnung entgegenzuwirken, werden die Parameter in Untergruppen unterteilt. Mit den Untergruppennummern werden die Parameter klassifiziert. Die Untergruppennummern sind für jede Hauptgruppe vorzugsweise gleich. In dem vorliegenden Beispiel ist die Untergruppennummer mit dem Wert 1 den physikalischen Parametern zugeordnet, vorzugsweise Messwerten für Widerstände, Induktivität und Kapazität einer elektronischen Schaltung ( R, L, C) am Rotor beziehungsweise Stator einer Druckmaschine, dem Trägheitsmoment des Rotors (J_{Rotor}) oder für die Temperatur(T_{Rotor}).

Die Untergruppennummer mit dem Wert 2 ist Nennwerten oder Beschreibungsdaten zugeordnet, beispielsweise dem Strom (I), der Spannung (U), Mittelwerten, Effektivwerten, Schlupffrequenz, Polzahl, Magnetisierungsstrom, Drehrichtung des Motors, des Tachos, der Bremse oder des Lüfters, des Moments von Motor oder Bremse, Tacho-Strichzahl oder die Anzahl der Spuren bei einem Digitaltacho, den Spannungsproportionalitätsfaktor an einem Analogtacho, Resolverfrequenz, -offset und -transformationsverhältnis sowie Resolverpolzahl, die Versorgungsspannung bzw. -strom für Geber und Bremse, das Volumen und der Druck des Lüfters, die Getriebeübersetzung oder das Getriebemoment, und dergleichen. Vorzugsweise können in das Funktionsregister bei einem EEPROM-Speicherbaustein Funktionsdaten aufgenommen werden, welche Informationen über die Speicherorganisation beziehungsweise die Codierung des Funktionseintrags sowie der Funktionsdaten als auch Formate wie Haupt- und Untergruppenstruktur enthalten.

Die Untergruppennummer mit dem Wert 3 gibt die Grenzwerte der Anlage an. Diese sind insbesondere Grenzwerte für Impulsströme mit Impulsstromzeiten, Entmagnetisierung, Dauerbetrieb, Aussetzbetrieb, mechanische Maximaldrehzahl, Temperatur, Warnungs- und Abschaltgrenzen des Temperatursensors, thermischer Motorschutz, Abschaltwiderstand, und dergleichen.

Die Untergruppennummer mit dem Wert 4 gibt Standardparameter für die Stromregelung an. Dies sind insbesondere Rotorzeitkonstante (Ta), Übertragungsfaktor (Ka), Beginn der Sättigung, Ende der Sättigung, Minimale Statorinduktivität, Rotorstreuinduktivität, und dergleichen.

Die Untergruppennummer mit dem Wert 5 gibt die verkoppelten Regelparameter an, vorzugsweise P-Verst., I-Verst., Lückgr. (50/60 Hz), parameterisierter Ankerwiderstand einschließlich Bürstenspannung/I-Nenn), und dergleichen.

Die Untergruppennummer mit dem Wert 6 gibt die mechanische Daten an, vorzugsweise Gewicht (Masse), Isolationsklasse, Wellenhöhe, Wellendurchmesser, Länge, Befestigung, Baugröße, Bauform, Anschluss, Stecker, Ösen, Klemmkastenlage.

Die Untergruppennummer mit dem Wert 7 gibt die Verwaltungsdaten an, vorzugsweise Herstellernummer, Herstellerkennung, Typenkennung, Seriennummer einschließlich der Seriennummern des Gebers, der Bremse, des Steckers, und dergleichen.

Die physikalischen Einheiten werden vorzugsweise in standardisierten Einheiten (Meter, Kilogramm, Sekunde, Ampere, Volt, Watt und deren Kombination angegeben.

Jeder Parameter erhält seinen Interpretationsrahmen erst durch die Untergruppe in der z. B. Nenn- oder Min/Max-Wert spezifiziert ist. Da die Hauptgruppennummer die Komponentenart kennzeichnet, werden die Datenfelder einer Untergruppe zur Parameterklassifizierung ausschließlich in Verbindung mit einer solchen verwendet und mit der Hauptgruppennummer ausgewertet.

Abschließend werden Datentyp und gegebenenfalls der Exponent bei Integertypen des Parameters mit einem Byte codiert. Für Datentyp und Exponent werden bestimmte Steuerbits vorgesehen, so dass das Format rückwärts kompatibel geändert werden kann.

Für alle Speicheradressen ist ein Platzhalter vorgesehen, der im Beispiel den Wert "00 H" aufweist. Die Speicherung der Funktionsdaten erfolgt gemäß dem Verfahren "little endian", bei welchem das "last significant byte" auf der niedrigsten und das "most significant byte" auf der höchsten Speicheradresse angeordnet ist. Eine Ausnahme macht dabei die CRC-Prüfsumme, welche an das Ende eines Datensegments angehängt wird - "big endian".

Die Gruppennummern der Haupt - und Untergruppen werden festgelegt und werden nicht mehr verändert. Die Formate der Funktionsdaten werden für jeden einzelnen Parameter mit dem Steuerbyte codiert, um die Flexibilität zu erhöhen. Zur Angabe, welcher Speicherbereich belegt ist, wird zu Beginn des Speichers, die Länge des gesamten Datenfeldes vorangestellt. Eine Prüfsumme wird durch Byteaddition berechnet. Zur Gewährleistung der Datensicherheit wird ein CRC - Prüfwort am Ende des Datenfeldes angehängt. Des weiteren wird die Anzahl der Bytes aller Haupt- und Untergruppen den Haupt- beziehungsweise Untergruppensegmenten vorangestellt. Dadurch können sehr schnell Zeiger berechnet werden, die auf die nächste Haupt- oder Untergruppe verweisen.

Die Gesamtanzahl der Bytes der Haupt- beziehungsweise Untergruppen umfasst alle Bytes der Parameterfelder zuzüglich zwei Bytes für das Anzahlwort selbst sowie weitere zwei Bytes für die Haupt- bzw. Untergruppennummer. Der unbenutzte restliche Speicherbereich wird mit Füllbytes "00 H" belegt.

Zur Gewährleistung der Datensicherheit wird am Ende des kompletten Datenblocks eine CRC-Prüfsumme angehängt. CRC bedeutet "cyclic redundancy check" und ist ein bekanntes Prüfverfahren, bei dem der Divisionsrest einer Modulo-2-Arithmetik eines zyklischen Codes als Prüfwort verwendet wird.

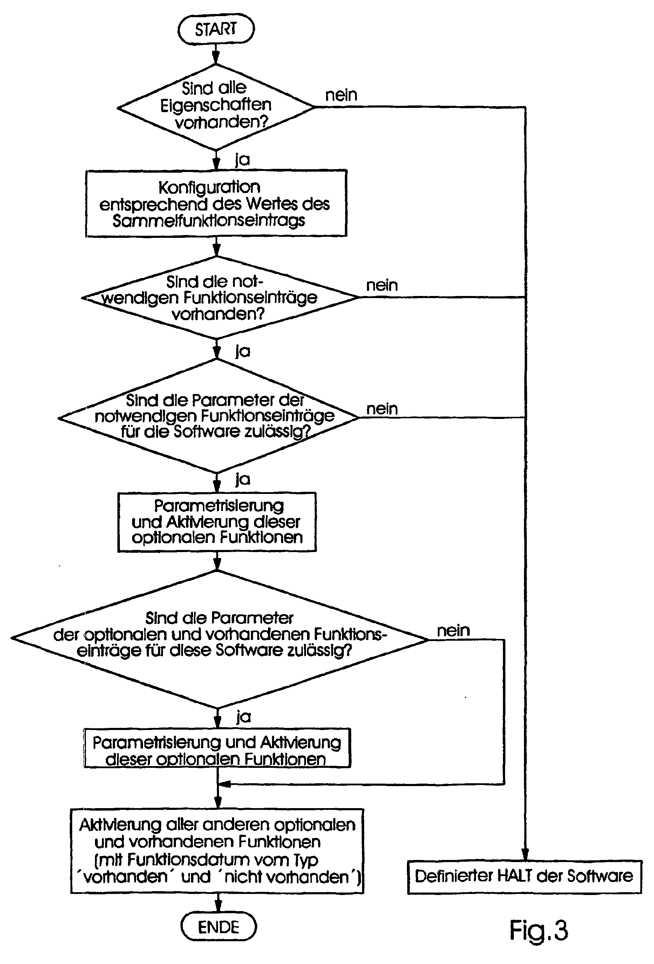

In Figur 3 ist ein typisches Ablaufschema dargestellt, welches bei der Prüfung des Funktionsregisters während einer Abfrage auf Kompatibilität durch die CPU durchgeführt wird. Bei diesem Zugriff wird zunächst im Sammelfunktionseintrag geprüft, ob alle physikalischen Eigenschaften, die dieses Datenverarbeitungsprogramm benutzt, von der Funktionseinheit auch zur Verfügung gestellt werden. Ist dies nicht der Fall, wird das Datenverarbeitungsprogramm abgebrochen. Hierbei kann zuvor eine Fehlermeldung an eine Anzeigevorrichtung ausgegeben werden.

Sind alle Eigenschaften vorhanden, wird der Zugriff auf die Funktionseinheit gemäß dem Sammelfunktionseintrag konfiguriert. Danach wird der Funktionseintrag im Funktionsregister geprüft, ob die Eigenschaften für den Zugriff auf die Funktionseinheit (notwendige Funktionen) vorhanden sind. Ist dies nicht der Fall wird das Programm abgebrochen. Ist dies der Fall, wird geprüft, ob die Parameter der Funktionsdaten für den Zugriff des Datenverarbeitungsprogramms zulässig sind, und gegebenenfalls wird die notwendige Parametrisierung der Funktionsdaten vorgenommen. Andernfalls wird das Programm abgebrochen. Schließlich werden die Parameter der optionalen und als vorhanden festgestellten Eigenschaften daraufhin geprüft, ob sie für den Zugriff des Datenverarbeitungsprogramms zulässig sind. Gegebenenfalls werden die optionalen Eigenschaften parametrisiert und aktiviert. Andernfalls werden nur die notwendigen Eigenschaften aktiviert.

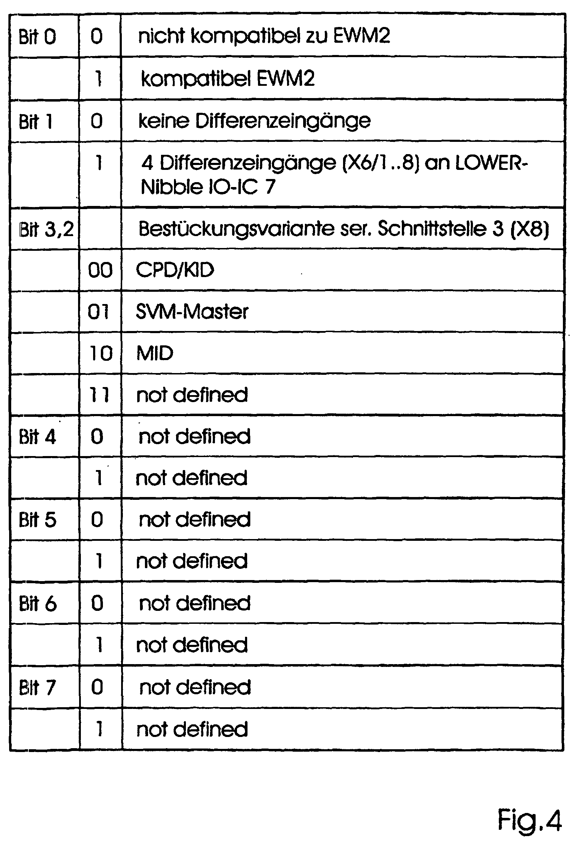

In Figur 4 ist ein Beispiel eines Sammelfunktionseintrags dargestellt. Im Sammelfunktionseintrag sind allen Eigenschaften der Funktionseinheit EWM3, Funktionsdaten zugeordnet, welche gegenüber der Funktionseinheit EMW2 Veränderungen aufweist und nicht durch die alten Datenverarbeitungsprogramme der EMW2 ermittelt werden können. Diesen Eigenschaften fehlen in dem entsprechenden Funktionseintrag, welche das Funktionsregister von EWM3 aufweist. Die Standardlänge des Eintrags sind acht Bit. Das erste Bit "0" ist entweder auf "0" oder auf "1" geschaltet Es gibt im vorliegenden Beispiel an, ob die Funktionseinheit EWM3 mit der Funktionseinheit EWM2 kompatibel ist. Der Wert "0" gibt an, dass die Funktionseinheit kompatibel ist. Ist dies der Fall, kann das EWM3 als Ersatzteil das EWM2 ersetzen, ohne dass die darauf zugreifenden Datenverarbeitungsprogramme verändert werden müssen. Die für den Zugriff der Datenverarbeitungsprogramme der EMW2 erforderlichen Funktionsdaten sind in dem Funktionseintrag des Funktionsregisters, welcher hier nicht abgebildet ist, angegeben.

### Bezugszeichenliste

- 1: Vorrichtung
- 2: Funktionseinheit
- 3: Datenverarbeitungseinheit (CPU)
- 4: Funktionsregister
- 5: Speicher
- 6: Eingabe-Ausgabe-Einheit

## Patentansprüche

1. Vorrichtung (1) zur Erkennung von Funktionseinheiten (2) eines elektrisches Systems mit einer oder mehreren Funktionseinheiten (2) vorzugsweise in optionalen oder in unterschiedlichen Ausbaustufen, mit einer Datenverarbeitungseinheit (CPU) (3), die zur Ausführung eines Datenverarbeitungsprogramms mit den Funktionseinheiten (2) in Verbindung steht, wobei die eine oder mehrere Funktionseinheiten (2) jeweils ein Funktionsregister (4) mit einem nicht flüchtigen Speicher (5) zur Aufnahme von Funktionsdaten aufweisen,
**dadurch gekennzeichnet,**
**dass** in dem Funktionsregister (4) Funktionseinträge strukturiert abspeicherbar sind, dass ein Funktionsangebot besteht, welches von der Datenverarbeitungseinheit (CPU) (3) derart ausgelesen werden kann, dass der Betrieb der Funktionseinheit (2) aufgenommen werden kann, wenn die für das Datenverarbeitungsprogramm kompatiblen Funktionseinträge erkannt werden.

2. Vorrichtung (1) nach Anspruch 1,
**dadurch gekennzeichnet,**
**dass** jeder Funktionseintrag im Funktionsregister (4) vorzugsweise durch Löschen, Überschreiben und/oder Ergänzen von einzelnen und/oder von Gruppen von Funktionsdaten veränderbar ist.

3. Vorrichtung (1) nach einem oder mehreren der Ansprüche 1 bis 2,
**dadurch gekennzeichnet,**
**dass** Funktionsregister (4) verschiedener Funktionseinheiten (2) des elektrischen Systems vorzugsweise über die CPU (3) miteinander verbunden sind und die Kompatibilität einer Funktionseinheit (2) mit einer anderen Funktionseinheit (2) und/oder mit einem Datenverarbeitungsprogramm durch Vergleichen der korrespondierenden Funktions- und/oder Zugriffsdaten überprüfbar ist.

4. Vorrichtung (1) nach einem oder mehreren der Ansprüche 1 bis 3,
**dadurch gekennzeichnet,**
**dass** das Funktionsregister (4) einen Sammelfunktionseintrag aufweist, welchem Funktionsdaten von Eigenschaften der Funktionseinheit (2) zugeordnet sind, die nicht standardmäßig einem Funktionseintrag zugeordnet sind.

5. Vorrichtung nach Anspruch 4,
**dadurch gekennzeichnet,**
**dass** einzelne Funktionsdaten eines Funktionseintrags durch einen Eintrag im Sammelfunktionseintrag für bestimmte Zugriffe gesperrt werden.

6. Vorrichtung (1) nach einem oder mehreren der Ansprüche 1 bis 5,
**dadurch gekennzeichnet,**
**dass** das Funktionsregister (4) zur Speicherung der Funktionsdaten wenigstens einen mechanisch betätigbaren und/oder elektronischen Schreib-Lese-Speicher (5), vorzugsweise einen DIP-Schalter, eine Lötbrücke, einen Jumper oder einen elektronischen Speicherbaustein aufweist.

7. Vorrichtung (1) nach einem oder mehreren der Ansprüche 1 bis 6,
**dadurch gekennzeichnet,**
**dass** das elektrische System Funktionseinheiten (2) einer Baugruppe einer Druckmaschine, vorzugsweise Eingabe-Ausgabe-Einheiten (6), Stellantriebe, Schnittstellen und/oder Speicher- und Datenverarbeitungseinheiten (3) eines Antriebsmotors umfasst.

8. Verfahren zur Erkennung einer Funktionseinheit (2) mittels Vorrichtung (1) nach einem oder mehreren der Ansprüche 1 bis 6,
**dadurch gekennzeichnet,**
**dass** jede Eigenschaft der Funktionseinheit (2) durch einen dieser Eigenschaft zugeordneten Funktionseintrag und/oder Sammelfunktionseintrag im nicht flüchtigen Speicher (5) gespeichert wird, dass die Änderung eines Funktionseintrages durch Ersetzen, Ergänzen und/oder Löschen von einzelnen oder einer Gruppe von Funktionsdaten oder des gesamten Funktionseintrages im nicht flüchtigen Speicher (5) erfolgt und dass von einem Datenverarbeitungsprogramm die unveränderten und kompatiblen Eigenschaften der Funktionseinheit weiterhin erkannt werden.

9. Verfahren nach Anspruch 8,
**dadurch gekennzeichnet,**
**dass** beim Betrieb des elektronischen Systems mit einem Datenverarbeitungsprogramm die Funktionsdaten des Funktionseintrags mit den Zugriffsdaten des Datenverarbeitungsprogramms von der CPU (3) auf Kompatibilität geprüft werden und dass der Zugriff auf die Funktionseinheit (2) nur entsprechend der kompatiblen Funktionsdaten gesteuert wird.

10. Verfahren (1) nach Anspruch 9,
**dadurch gekennzeichnet,**
**dass** die CPU (3) bei fehlender Kompatibilität eines Datenverarbeitungsprogramms mit einer Funktionseinheit (2) eine Fehlermeldung erzeugt und/oder den Programmablauf abbricht.

11. Verfahren zur Erkennung einer Funktionseinheit (2) nach Anspruch 9 oder 10,
**gekennzeichnet durch**
folgende Schritte:
- Prüfen des Sammelfunktionseintrags, ob die notwendigen Eigenschaften vorhanden sind und die Funktionseinheit kompatibel ist;
- Initialisierung der kompatiblen Funktionseinheit (2) für den Zugriff **durch** die vom - Datenverarbeitungsprogramm gesteuerte CPU (3);
- Zugriff **durch** Aktivierung der kompatiblen Eigenschaften der Funktionseinheit (2);
- Prüfen der Kompatibilität der Parameter der optionalen und vorhandenen Funktionsdaten des Funktionsregisters (4) mit den parametrisierenden Zugriffsdaten des Datenverarbeitungsprogramms;
- Initialisierung der kompatiblen, optionalen und vorhandenen Funktionsdaten;
- Zugriff **durch** Aktivierung der optionalen und vorhandenen Eigenschaften.

12. Verfahren zur Erkennung einer Funktionseinheit (2) nach Anspruch 11,
**dadurch gekennzeichnet,**
**dass** die Initialisierung durch folgende Schritte vorgenommen wird:
- Konfigurieren der kompatiblen Funktionseinheit (2), entsprechend der Funktionsdaten aus dem Funktionsregister (4);
- Prüfen, ob alle für den Ablauf des Datenverarbeitungsprogramms benötigten Funktionsdaten vorhanden sind;
- Prüfen der Kompatibilität der Funktionsdaten mit den Zugriffsdaten des Datenverarbeitungsprogramms;
- Parametrisierung der kompatiblen Funktionsdaten.

## Claims

1. Device (1) for recognizing functional units (2) in an electrical system including one or more functional units (2) preferably in optional or different structural stages, comprising a data processing unit (CPU) (3) that is connected to the functional units (2) to execute a data processing program, said one or more functional units (2) having a respective function register (4) with a non-volatile memory (5) for holding function data,
**characterized in**
**that** in the function register (4), function entries are storable in a structured way,
**that** there is a function availability that can be read by the data processing unit (CPU) (3) such that the operation of the functional unit (2) can be started when the functional entries compatible with the data processing program are recognized.

2. Device (1) according to claim 1,
**characterized in**
**that** each function entry in the function register (4) is modifiable, preferably by deleting, overwriting and/or adding to individual function data and/or groups of function data.

3. Device (1) according to one or more of claims 1 to 2,
**characterized in**
**that** function registers (4) of various functional units (2) in the electrical system are preferably connected to one another via the CPU (3), and compatibility of a functional unit (2) with at least one other functional unit (2) and/or a data processing program is checkable by comparing the corresponding function data and/or access data.

4. Device (1) according to one or more of claims 1 to 3,
**characterized in**
**that** the function register (4) has a collective function entry that is assigned function data for properties of the functional unit (2) that are not assigned to a function entry by default.

5. Device according to claim 4,
**characterized in**
**that** individual function data of a function entry are blocked for certain accesses by an entry in the collective function entry.

6. Device (1) according to one or more of claims 1 to 5,
**characterized in**
**that** for storing the function data the function register (4) has at least one mechanically operated and/or electronic read/write memory (5), preferably a DIP switch, a solder bridge, a jumper, or an electronic memory chip.

7. Device according to one or more of claims 1 to 6,
**characterized in**
**that** the electrical system includes functional units (2) in a module of a printing machine, preferably input/output units (6), actuators, interfaces and/or memory and data processing units (3) of a driving motor.

8. Method of recognizing a functional unit (2) by means of a device (1) according to one or more of claims 1 to 6,
**characterized in**
**that** every property of the functional unit (2) is stored in the non-volatile memory (5) by a function entry associated with this property and/or by a collective function entry,
**that** the change in the function entry is done by replacing, adding to, and/or deleting individual function data or a group of function data or the entire function entry in the non-volatile memory (5); and
**that** a data processing program continues to recognize the unchanged and compatible properties of the function unit.

9. Method according to claim 8,
**characterized in**
**that** during operation of the electronic system by a data processing program, the function data of the function entry are checked for compatibility with the access data of the data processing program by the CPU (3) and that access to the functional unit (2) is controlled only in accordance with the compatible function data.

10. Method (1) according to claim 9,
**characterized in**
**that** if a data processing program is not compatible with a functional unit (2), the CPU (3) generates an error message and/or stops the execution of the program.

11. Method of recognizing a functional unit (2) according to claim 9 or 10,
**characterized by**
the steps of
- checking the collective function entry to determine whether the required properties are available and the functional unit is compatible;
- initializing the compatible functional unit (2) for access by the CPU (3), which is controlled by the data processing program;
- accessing by activating the compatible properties of the functional unit (2);
- checking the parameters of the optional and available function data of the function register (4) for compatibility with the configuring access data of the data processing program;
- initializing the compatible, optional and available function data;
- accessing by activating the optional and available properties.

12. Method of recognizing a functional unit (2) according to claim 11,
**characterized in**
**that** the intialization is carried out by the following steps of
- configuring the compatible functional unit (2) based upon the function data from the function register;
- checking as to whether all the function data required for execution of the data processing program are present;
- checking the function data for compatibility with the access data of the processing program;
- configuring the compatible function data.

## Revendications

1. Dispositif (1) de reconnaissance d'unités fonctionnelles (2) d'un système électrique avec une ou plusieurs unités fonctionnelles (2), de préférence dans des niveaux d'aménagement optionnels ou différents, et avec une unité de traitement de données (CPU) (3) qui est en liaison avec les unités fonctionnelles (2) pour réaliser un programme de traitement de données, l'une des unités fonctionnelles (2) ou plusieurs unités fonctionnelles (2) comprenant respectivement un registre de fonctions (4) avec une mémoire non volatile (5) servant à recevoir des données de fonctions,
**caractérisé en ce que**
des inscriptions de fonctions peuvent être mémorisées de manière structurée dans le registre de fonctions (4) et **en ce qu'**il existe une offre de fonctions qui peut être lue de telle façon par l'unité de traitement de données (CPU) (3) que le fonctionnement de l'unité fonctionnelle (2) peut démarrer lorsque les inscriptions de fonctions compatibles pour le programme de traitement de données sont reconnues.

2. Dispositif (1) selon la revendication 1,
**caractérisé en ce que**
chaque inscription de fonctions dans le registre de fonctions (4) peut être modifiée de préférence par un effacement, par une surinscription et/ou par un complément apporté à des données de fonctions individuelles ou à des groupes de données de fonctions.

3. Dispositif (1) selon l'une quelconque ou plusieurs des revendications 1 à 2,
**caractérisé en ce que**
des registres de fonctions (4) de différentes unités fonctionnelles (2) du système électrique sont reliés entre eux de préférence par l'intermédiaire de l'unité de traitement de données (CPU) (3) et **en ce que** la compatibilité d'une unité fonctionnelle (2) avec une autre unité fonctionnelle (2) et/ou avec un programme de traitement de données peut être vérifiée par une comparaison des données de fonctions et/ou d'accès correspondantes.

4. Dispositif (1) selon l'une quelconque ou plusieurs des revendications 1 à 3,
**caractérisé en ce que**
le registre de fonctions (4) comprend une inscription d'ensemble de fonctions à laquelle sont attribuées des données de fonctions concernant des propriétés de l'unité fonctionnelle (2) qui ne sont pas attribuées de manière standard à une inscription de fonctions.

5. Dispositif (1) selon la revendication 4,
**caractérisé en ce que**
des données de fonctions individuelles d'une inscription de fonctions sont bloquées pour certains accès par une inscription dans l'inscription d'ensemble de fonctions.

6. Dispositif (1) selon l'une quelconque ou plusieurs des revendications 1 à 5,
**caractérisé en ce que**,
pour la mémorisation des données de fonctions, le registre de fonctions (4) comprend au moins une mémoire d'écriture et de lecture (5) pouvant être actionnée mécaniquement et/ou électroniquement, de préférence un interrupteur DIP, un pont soudé, un cavalier ou un module électronique de mémoire.

7. Dispositif (1) selon l'une quelconque ou plusieurs des revendications 1 à 6,
**caractérisé en ce que**
le système électrique comprend des unités fonctionnelles (2) d'un composant d'une machine d'impression, de préférence des unités d'entrée/sortie (6), des servomoteurs, des interfaces et/ou des unités de mémorisation et de traitement de données (3) d'un moteur d'entraînement.

8. Procédé de reconnaissance d'une unité fonctionnelle (2) au moyen d'un dispositif (1) selon l'une quelconque ou plusieurs des revendications 1 à 6,
**caractérisé en ce que**
chaque propriété de l'unité fonctionnelle (2) est mémorisée dans la mémoire non volatile (5) par une inscription de fonctions attribuée à cette propriété et/ou par une inscription d'ensemble de fonctions, **en ce que** la modification d'une inscription de fonctions a lieu par un remplacement, par un complément et/ou par un effacement de données de fonctions individuelles ou de groupes de telles données de fonctions ou de l'ensemble de l'inscription de fonctions dans la mémoire non volatile (5) et **en ce qu'**un programme de traitement de données continue à reconnaître les propriétés non modifiées et compatibles de l'unité fonctionnelle.

9. Procédé selon la revendication 8,
**caractérisé en ce que**,
lors du fonctionnement du système électronique avec un programme de traitement de données, a lieu une vérification de la compatibilité des données de fonctions de l'inscription de fonctions avec les données d'accès du programme de traitement de données de l'unité de traitement de données (CPU) (3) et **en ce que** l'accès à l'unité fonctionnelle (2) n'est commandé que conformément aux données de fonctions compatibles.

10. Procédé (1) selon la revendication 9,
**caractérisé en ce qu'**
en cas de manque de compatibilité d'un programme de traitement de données avec une unité fonctionnelle (2), l'unité de traitement de données (CPU) (3) génère un message d'erreur et/ou interrompt le déroulement du programme.

11. Procédé de reconnaissance d'une unité fonctionnelle (2) selon la revendication 9 ou 10, **caractérisé par** les étapes suivantes :
- vérification de l'inscription d'ensemble de fonctions pour déterminer si les propriétés nécessaires existent et si l'unité fonctionnelle est compatible ;
- initialisation de l'unité fonctionnelle compatible (2) pour l'accès par l'unité de traitement de données (CPU) (3) commandée par le programme de traitement de données ;
- accès par une activation des propriétés compatibles de l'unité fonctionnelle (2) ;
- vérification de la compatibilité des paramètres des données de fonctions optionnelles et existantes du registre de fonctions (4) avec les données d'accès assurant le paramétrage du programme de traitement de données ;
- initialisation des données de fonctions compatibles, optionnelles et existantes ;
- accès par une activation des propriétés optionnelles et existantes.

12. Procédé de reconnaissance d'une unité fonctionnelle (2) selon la revendication 11,
**caractérisé en ce que**
l'initialisation est réalisée conformément aux étapes suivantes :
- configuration de l'unité fonctionnelle compatible (2) conformément aux données de fonctions émanant du registre de fonctions (4) ;
- vérification pour déterminer si toutes les données de fonctions nécessaires pour le déroulement du programme de traitement de données sont disponibles ;
- vérification de la compatibilité des données de fonctions avec les données d'accès du programme de traitement de données ;
- réalisation du paramétrage des données de fonctions compatibles.
